# EUROPÄISCHE PATENTSCHRIFT

(11) **EP 1 649 151 B1**
(45) Veröffentlichungstag und Bekanntmachung des Hinweises auf die Patenterteilung: **17.11.2010**
(21) Anmeldenummer: 04741823.1
(22) Anmeldetag: 17.06.2004
(51) Int. Cl.: F02D 9/12, F16K 1/12

(54) **VERFAHREN ZUR ANORDNUNG EINES VENTILGLIEDES IN EINER ZUSATZSTEUERVENTILEINRICHTUNG**
METHOD FOR INSTALLING A VALVE MEMBER IN AN AUXILIARY CONTROL VALVE DEVICE
PROCEDE D'INSTALLATION D'UN OBTURATEUR DE SOUPAPE DANS UN ENSEMBLE SOUPAPE DE COMMANDE SUPPLEMENTAIRE

(30) Priorität: 31.07.2003 DE 10335121
(43) Veröffentlichungstag der Anmeldung: 26.04.2006
(73) Patentinhaber: Continental Automotive GmbH, 30165 Hannover (DE)
(72) Erfinder: COLIC, Rajko, 61350 Bad Homburg (DE); MANN, Thomas, 61130 Nidderau (DE)
(86) Internationale Anmeldenummer: PCT/EP2004/051151
(87) Internationale Veröffentlichungsnummer: WO 2005/012710

(56) Entgegenhaltungen:
- FR-A- 2 714 114
- US-A- 3 119 405
- US-A- 4 412 517
- US-A- 5 584 270
- US-A1- 2003 024 502

## Beschreibung

Die Erfindung bezieht sich auf ein Verfahren zur Anordnung eines Ventilgliedes in einer Zusatzsteuerventileinrichtung. Ventilglieder in Zusatzsteuerventileinrichtungen sind bekannt. Die prinzipielle Funktionsweise von Zusatzsteuerventileinrichtungen, in denen Ventilglieder angeordnet sind, wird in der DE 101 37 828 A1 oder auch der US 2003/0024502 A1 beschrieben. Bei diesen Zusatzsteuerventileinrichtungen ist es vorgesehen, ein Ventilglied anzuordnen, das im Wesentlichen pilzförmig ausgebildet ist und das in Richtung der Längsachse der Zusatzsteuerventileinrichtung reversibel beweglich in einer Führung geführt ist. Bei diesem Ventilglied ist an einem Schaft ein hutförmiger Teller angeordnet, der zu der vom Einlasskanal abgewandten Seite hin konkav mit einem Scheitelpunkt ausgebildet ist. Dieses Ventilglied wird im Betrieb zwischen dem Portalmagneten und dem Fangmagneten bewegt. Auf diese Weise wird die jeweils gewünschte Öffnungsstellung bzw. Schließstellung der Zusatzsteuerventileinrichtung eingestellt. Der Schaft des Ventilgliedes endet an einem Bund. Zwischen dem Bund und dem Boden des Sackloches, in dem der Schaft geführt wird, stützt sich eine erste Feder ab. Zwischen dem Bund und dem anderen Ende des Sackloches stützt sich eine weitere Feder ab. Auf diese Weise bildet das Ventilglied zusammen mit den beiden Federn ein schwingungsfähiges System, welches von den Federn in einer Mittellage gehalten wird. Die Eigenfrequenz des schwingungsfähigen Systems ist durch Federkonstanten und das Gewicht des Ventilgliedes gegeben. Auf diese Weise wird sichergestellt, dass ein außerordentlich rascher Wechsel zwischen der Offen- und der Schließstellung möglich ist, wobei von dem Portalmagnet und dem Fangmagnet, zwischen denen das Ventilglied reversibel beweglich geführt wird, jeweils nur die Haltekraft aufgebracht werden muss und die kinetische Energie in den Federn gespeichert wird. Die Zusatzsteuerventileinrichtungen werden in der Regel in die Einlasskanäle von Kolbenbrennkraftmaschinen eingebracht. Sie dienen dabei zur Impulsaufladung von Otto- und Dieselmotoren. Die Impulsaufladung bewirkt dabei eine Erhöhung der Zylinderfüllung und damit eine Steigerung des Drehmoments im niedrigen und mittleren Drehzahlbereich. Für eine optimale Auslegung der Zusatzsteuerventileinrichtungen ist es erforderlich, dass der ventilteller im stromlosen Zustand der Zusatzsteuerventileinrichtung eine möglichst exakte Mittellage zwischen dem Portalmagneten und dem Fangmagneten einnimmt. Dabei muss der Abstand des Ventiltellers zum Portalmagneten gleich dem Abstand des Ventiltellers zum Fangmagneten sein. Der Ventilteller muss somit in der stromlosen Mittellage zwischen den mechanischen Anschlägen eine eng tolerierte Mittellage einnehmen, um die Funktion des Aktuators bei möglichst niedrigem Kraftniveau beider Elektromagnete zu gewährleisten. Bei den bekannten Zusatzsteuerventileinrichtungen ist jedoch nachteilig, dass sich die optimale Mittellage infolge von Fertigungstoleranzen nicht in engen Toleranzbereichen einstellen lässt. Dabei spielen in nachteiliger Weise mehrere Faktoren eine Rolle. Zum einen weisen die beiden Ventilfedern Fertigungstoleranzen auf. Des Weiteren sind beispielsweise allgemeine Fertigungstoleranzen bei der Herstellung der Führung für das Ventilglied zu verzeichnen. Dies hat in nachteiliger Weise zur Folge, dass sich eine optimale Mittellage des Ventilgliedes im stromlosen Zustand der Zusatzsteuerventileinrichtung auch dann nicht einstellen lässt, wenn die konstruktiven Abmessungen und Auslegungen der Bauteile zueinander, die für eine solche optimale Mittellage einzustellen sind, auch genau ingenieurmäßig bestimmt und umgesetzt werden. Um diesem Nachteil entgegenzuwirken, müssen dann relativ aufwändige manuelle Justiervorgänge durchgeführt werden, die sich in der Großfertigung aber nicht realisieren lassen, da dies allgemein zu aufwändig wäre.

Der Erfindung liegt daher die Aufgabe zugrunde, ein Verfahren zu Anordnung eines Ventilgliedes in einer Zusatzsteuerventileinrichtung zu schaffen, durch welches sich die nachteiligen Auswirkungen von Fertigungstoleranzen weitgehend vermeiden lassen. Es soll ferner für die Großfertigung geeignet sein.

Die der Erfindung zugrunde liegende Aufgabe wird durch ein Verfahren zur Anordnung eines Ventilgliedes in einer Zusatzsteuerventileinrichtung gelöst, bei dem in einem ersten Schritt die Innenseite der Führung für das Ventilglied an ihrem, dem Fangmagneten zugewandten Ende mit einem Federlager versehen wird; in einem zweiten Schritt eine erste Ventilfeder in die Führung an ihrem, dem Fangmagneten abgewandten Ende bis zum Anliegen an das Federlager eingebracht wird; der Schaft des Ventilgliedes und ein mit diesem an seinem, dem Fangmagneten abgewandten Ende verbundenes erstes Gegenlager für die erste Ventilfeder in einem dritten Schritt in die Führung an ihrem, dem Fangmagneten abgewandten Ende eingebracht werden, wobei der Schaft innerhalb der ersten Ventilfeder geführt wird und das erste Gegenlager abschließend in der Führung an einer vorab bestimmten ersten Position, die theoretisch eine genaue Einstellung der Mittellage des Ventilgliedes im stromlosen Zustand der Zusatzsteuerventileinrichtung ermöglicht, lösbar gehalten wird; bei dem in einem vierten Schritt der Ventilteller des Ventilgliedes mit seinem mittig angeordneten umlaufenden Bund mit seiner konkaven Seite auf den Schaft an seinem, dem Fangmagneten zugewandtem Ende aufgeschoben und mit dem Fangmagneten zur Anlage gebracht wird und Ventilteller und Schaft dann miteinander verbunden werden; bei dem in einem fünften Schritt eine zweite Ventilfeder in die Führung an ihrem, dem Fangmagneten abgewandten Ende bis zum Anliegen an das erste Gegenlager eingebracht wird; und bei dem in einem sechsten Schritt ein zweites Gegenlager für die zweite Ventilfeder in die Führung an ihrem, dem Fangmagneten abgewandten Ende eingebracht und in der Führung an einer vorab bestimmten zweiten Position, die theoretisch eine genaue Einstellung der Mittellage des Ventilgliedes im stromlosen Zustand der Zusatzsteuerventileinrichtung ermöglicht, fixiert wird; und das Halten des ersten Gegenlagers in der vorab bestimmten ersten Position abschließend in einem siebten Schritt aufgehoben wird. Das Ventilglied ist zweiteilig ausgebildet und besteht aus dem Ventilteller und dem Schaft. Die Führung für das Ventilglied ist in der Regel im Wesentlichen zylindrisch und rohrförmig ausgebildet. Bei dem Fangmagneten handelt es sich um den Ringmagnet, wobei damit die Kombination aus Spule und Magnetjoch gemeint ist. Der Schaft des Ventilgliedes ist ebenfalls rohrförmig in Form einer Hülse ausgebildet. Das erste Gegenlager dient als Anlagefläche für das nicht am Federlager anliegende Ende der ersten Ventilfeder. Das ist in der Regel im weitesten Sinne teilkreistörmig ausgebildet und weist in der Innenseite in der Regel ein Gewinde zur Befestigung mit dem Schaft auf. Der Schaft ist dann mit einem Gegengewinde versehen und kann somit mit dem ersten Gegenlager verschraubt werden. Das zweite Gegenlager ist ähnlich konstruktiv ausgebildet und weist in der Regel außen ein Außengewinde auf, mit welchem es in der Führung für das Ventilglied, die dann mit einem komplementären Innengewinde ausgebildet ist, fixiert werden kann. Bei den vorab bestimmten ersten Positionen und zweiten Positionen, die jeweils theoretisch eine genaue Einstellung der Mittellage des Ventilgliedes im stromlosen Zustand der Zusatzsteuerventileinrichtung ermöglichen, handelt es sich um vorab ingenieurmäßig ausgelegte Positionen, die in der Regel auf eine Bezugsfläche in der Zusatzsteuerventileinrichtung bezogen sind. Wären keine Fertigungstoleranzen vorhanden, so könnte bei der Realisierung der vorab bestimmten ersten Position und der vorab bestimmten zweiten Position eine exakte Mittellage des Ventilgliedes, bzw. des Ventiltellers zwischen dem Portalmagneten und dem Fangmagneten der Zusatzsteuerventileinrichtung eingestellt werden. Das erste Gegenlager wird in der vorab bestimmten ersten Position lösbar gehalten. Dies erfolgt beispielsweise in der Regel durch das Einführen eines Stößels in die Führung, an ihrem, dem Fangmagneten abgewandten Ende. Wird dieser Stößel wieder entfernt, was nach dem siebten Schritt des Verfahrens vorgesehen sein kann, kann das erste Gegenlager in der Führung in Richtung der Längsachse wieder verschoben werden bedingt durch die Federkräfte. Es hat sich nun in überraschender Weise gezeigt, dass der Einfluss von Fertigungstoleranzen, der sich nachteilig auf die Einstellung der Mittellage des Ventilgliedes im stromlosen Zustand der Zusatzsteuerventileinrichtung auswirkt, nahezu weitgehend vermieden wird. Dies wird im Wesentlichen dadurch erreicht, dass die Fertigungstoleranzen, die bei der Herstellung der ersten Ventilfeder und bei der Herstellung der Führung des Ventilgliedes entstehen, nahezu vollständig kompensiert werden. Bei der Bestimmung der ersten Position für das erste Gegenlager wird unter Berücksichtigung der Federkennwerte der ersten Ventilfeder und der zweiten Ventilfeder eine Auslegung derart vorgenommen, dass sich eine optimale Mittellage des Ventiltellers ausgehend von einer am Fangmagneten anliegenden Position des Ventiltellers nach dem Abschluss des siebten Schrittes des Verfahrens einstellt. Wäre beispielsweise der Ventilteller vor der Realisierung der ersten Position fest mit dem Schaft verbunden, so wäre aufgrund der Fertigungstoleranzen nach der Einstellung der ersten Position dann ein dichtes Anliegen des Ventiltellers am Anschlag des Fangmagneten nicht möglich. Zwischen dem Ventilteller und dem Fangmagneten wäre dann, bedingt durch die Fertigungstoleranzen, beispielsweise der ersten Ventilfeder, ein unerwünschter Spalt vorhanden, der allein ein Einstellen einer optimalen Mittellage verhindern würde. Im Gegensatz dazu ist es jedoch nach dem erfindungsgemäßen Verfahren vorgesehen, nach Einstellung der ersten Position, die theoretisch eine genaue Einstellung der Mittellage des Ventilgliedes im stromlosen Zustand der Zusatzsteuerventileinrichtung ermöglicht, den Ventilteller auf den Schaft aufzuschieben, bis der Ventilteller den Anschlag des Fangmagneten kontaktiert. Erst dann erfolgt die Verbindung des Ventiltellers mit dem Schaft, was beispielsweise durch Kleben erfolgen kann. Auf diese Weise wird sichergestellt, dass die Fertigungstoleranzen, bedingt durch die erste Ventilfeder und die Führung des Ventilgliedes vollständig kompensiert werden. Bei der Anordnung des Ventilgliedes in der Zusatzsteuerventileinrichtung wirken sich dann nur noch lediglich diejenigen Fertigungstoleranzen aus, die durch die zweite Ventilfeder und gegebenenfalls durch das zweite Gegenlager bedingt sind. Diese sind jedoch vernachlässigbar klein und wirken sich nicht mehr nachteilig auf die Einstellung einer genauen Mittellage des Ventilgliedes im stromlosen Zustand der Zusatzsteuerventileinrichtung aus. Nachdem das zweite Gegenlager in der Führung fixiert ist wird das Halten des ersten Gegenlagers in der vorab bestimmten ersten Position aufgehoben, was dann in der Regel durch ein Entfernen des Stößels aus der Führung erfolgt. Nachdem dies geschehen ist, nimmt das Ventilglied durch die dann wirkenden Federkräfte automatisch eine nahezu genau Mittellage zwischen dem Portalmagneten und dem Fangmagneten bei stromlosem Zustand der Zusatzsteuerventileinrichtung ein. Dabei ist besonders vorteilhaft, dass auf aufwendige Justiervorgänge verzichtet werden kann, so dass das Verfahren auch besonders vorteilhaft bei der Großfertigung eingesetzt werden kann.

Nach einer bevorzugten Ausgestaltung der Erfindung ist vorgesehen, dass im dritten Schritt der Schaft und das erste Gegenlager als Einzelteil in die Führung eingebracht werden. Auf diese Weise lässt sich das Verfahren rationeller durchführen.

Gemäß einer weiteren bevorzugten Ausgestaltung der Erfindung ist vorgesehen, das dass Verbinden von Ventilteller und Schaft durch Schweißen erfolgt. Dies eignet sich besonders vorteilhaft in der Großfertigung, wobei gleichzeitig eine relativ feste Verbindung zwischen dem Ventilteller und dem Schaft eingestellt werden kann, was besonders vorteilhaft bei längeren Betriebszeiten der Zusatzsteuerventileinrichtung ist.

Die Erfindung wird nachfolgend anhand der Zeichnung (Fig. 1 bis Fig. 7) näher und beispielhaft erläutert.
- Fig. 1: zeigt Teile der Zusatzsteuerventileinrichtung dreidimensional in Form einer Explosionszeichnung.
- Fig. 2: zeigt Teile der Zusatzsteuerventileinrichtung dreidimensional nach Abschluss des zweiten Schrittes des Verfahrens.
- Fig. 3: zeigt Teile der Zusatzsteuerventileinrichtung dreidimensional nach Abschluss des dritten Schrittes des Verfahrens.
- Fig. 4: zeigt Teile der Zusatzsteuerventileinrichtung dreidimensional nach Abschluss des vierten Schrittes des Verfahrens.
- Fig. 5: zeigt Teile der Zusatzsteuerventileinrichtung dreidimensional nach Abschluss des fünften Schrittes des Verfahrens.

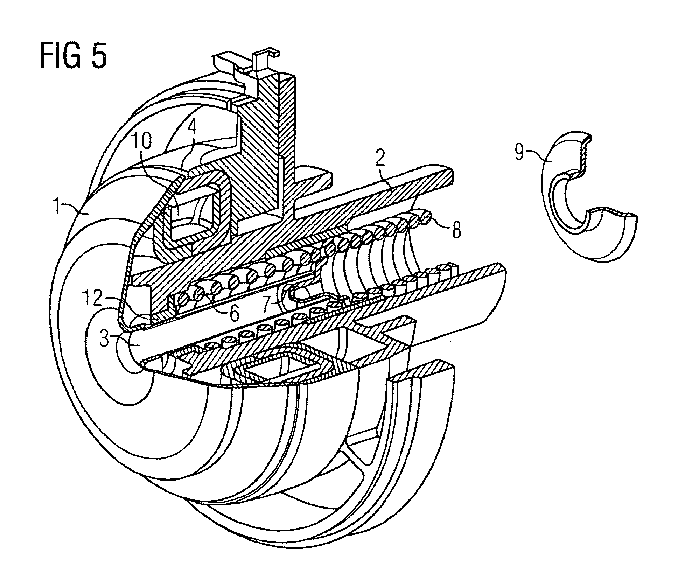

- Fig. 5: zeigt Teile der Zusatzsteuerventileinrichtung dreidimensional nach Abschluss des sechsten Schrittes des Verfahrens.

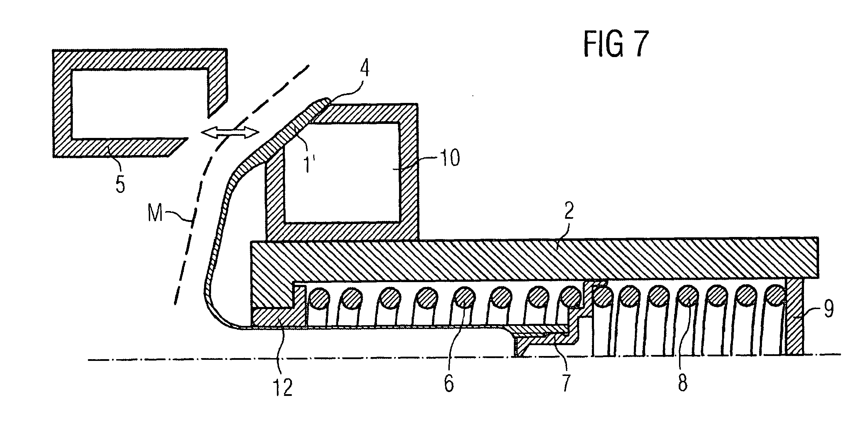

- Fig. 7: zeigt einen Längsschnitt durch Teile einer Zusatzsteuerventileinrichtung nach dem Stand der Technik.

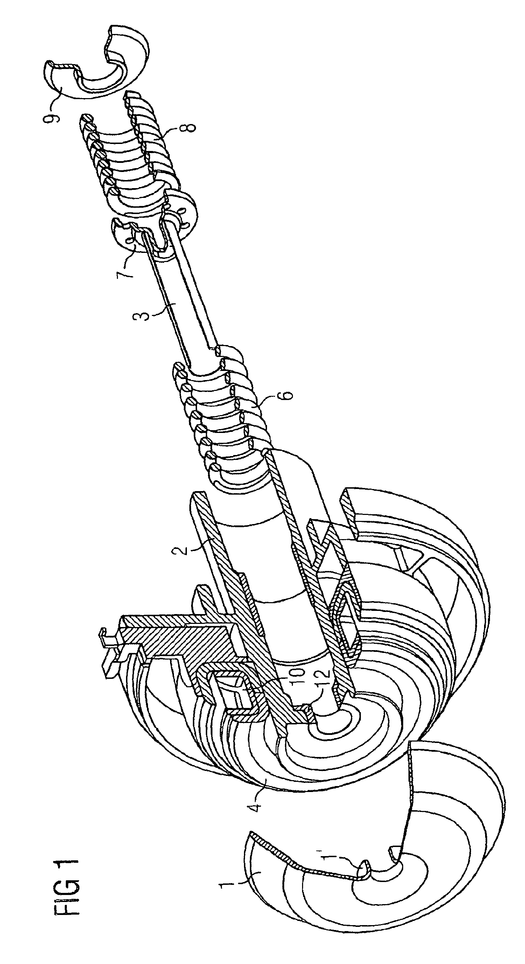

In Fig. 1 sind Teile der Zusatzsteuerventileinrichtung dreidimensional in Form einer Explosionszeichnung dargestellt. Der Ventilteller 1 weist einen mittig angeordneten umlaufenden Bund 1' auf, der nahezu trichterförmig ausgebildet ist. In der Führung 2 für das Ventilglied ist an ihrem, dem Fangmagneten 10 abgewandten Ende ein Federlager 12 angeordnet. Der Fangmagnet 10 weist einen Anschlag 4 für den Ventilteller 1 auf. Es ist eine erste Ventilfeder 6 vorgesehen, in die der Schaft 3 des Ventilgliedes einführbar ist. An seinem, dem Fangmagneten 10 abgewandten Ende des Schaftes 3 ist ein erstes Gegenlager 7 für die erste Ventilfeder 6 angeordnet. Ferner ist eine zweite Ventilfeder 8 vorgesehen, die zwischen dem ersten Gegenlager 7 und dem zweiten Gegenlager 9 positioniert wird.

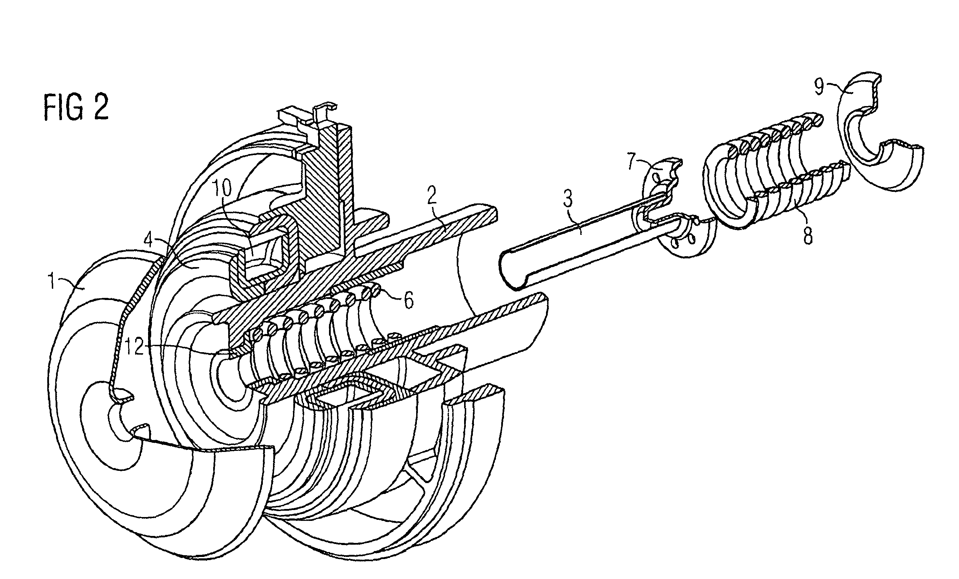

In Fig. 2 sind Teile der Zusatzsteuerventileinrichtung dreidimensional nach Abschluss des zweiten Schrittes des Verfahrens dargestellt. Nach dem Verfahren zur Anordnung eines Ventilgliedes in einer Zusatzsteuerventileinrichtung wird in einem ersten Schritt in der Innenseite der Führung 2 für das Ventilglied an ihrem, dem Fangmagneten 10 zugewandten Ende ein Federlager 12 angeordnet. Je nach Material des Federlagers 12 und der Führung 2 können das Federlager 12 und die Führung 2 auch aus einem Einzelteil bestehen. In einem zweiten Schritt wird eine erste Ventilfeder 6 in die Führung 2 an ihrem, dem Fangmagneten 10 abgewandten Ende bis zum Anliegen an das Federlager 12 eingebracht. Bei der ersten Ventilfeder 6 handelt es sich um eine Druckfeder.

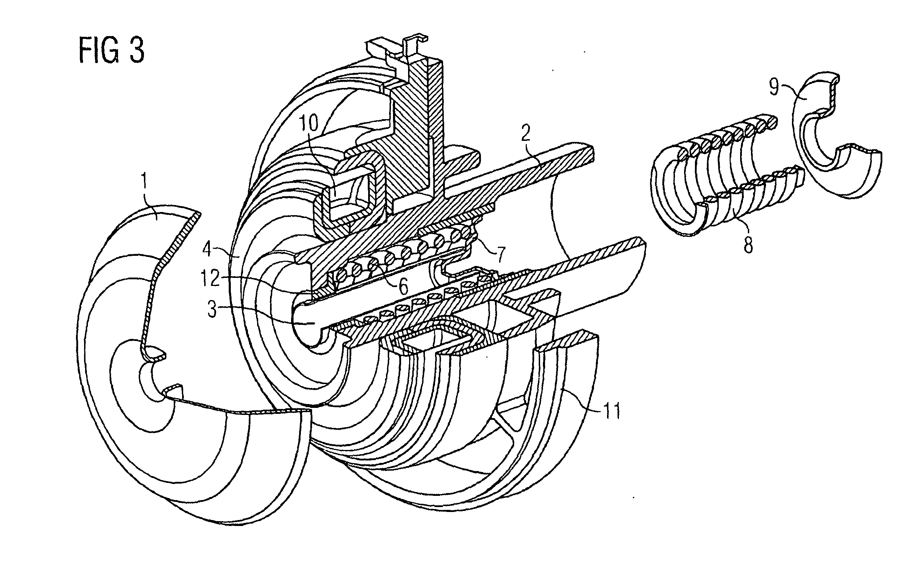

In Fig. 3 sind Teile der Zusatzsteuerventileinrichtung dreidimensional am Ende des vierten Schrittes des Verfahrens dargestellt. Ausgehend von der in Fig. 2 dargestellten Anordnung werden der Schaft 3 des Ventilgliedes und ein mit diesem an seinem, dem Fangmagneten 10 abgewandten Ende verbundenes erstes Gegenlager 7 für die erste Ventilfeder 6 in einem dritten Schritt in die Führung 2 an ihrem, dem Fangmagneten 10 abgewandten Ende eingebracht. Dabei wird der Schaft 3 innerhalb der ersten Ventilfeder 6 geführt, und das erste Gegenlager 7 wird abschließend in der Führung 2 an einer vorab bestimmten ersten Position, die theoretisch eine genaue Einstellung der Mittellage des Ventilgliedes im stromlosen Zustand der Zusatzsteuerventileinrichtung ermöglicht, lösbar gehalten. Dieses Halten erfolgt beispielsweise durch ein zentral mittiges Einführen eines Stößels (nicht dargestellt), der zunächst einmal seine Position hält. Die ingenieurmäßige Bestimmung dieser ersten Position und später auch der zweiten Position erfolgt dabei in Bezug auf die Bezugsfläche 11. Es können aber auch andere Flächen als Bezugsfläche 11 gewählt werden. Durch die Realisierung der vorab bestimmten ersten Position wird die optimale theoretische Federlänge der ersten Ventilfeder 6 eingestellt.

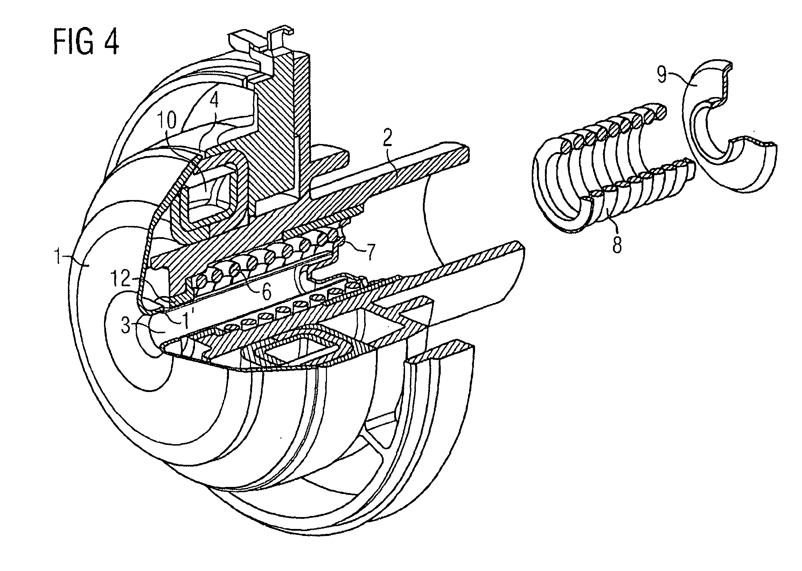

In Fig. 4 sind Teile der Zusatzsteuerventileinrichtung dreidimensional nach Abschluss des vierten Schrittes dargestellt. Ausgehend von der in Fig. 3 dargestellten Anordnung werden in einem vierten Schritt des Verfahrens der Ventilteller 1 des Ventilgliedes mit seinem mittig angeordneten umlaufenden Bund 1' mit seiner konkaven Seite auf den Schaft 3 aufgeschoben und mit dem Fangmagneten 10 an dem Anschlag 4 zur Anlage gebracht. Der Bund 1' ist dabei trichterförmig ausgebildet und weist einen Innendurchmesser auf, der etwas größer als der Außendurchmesser des Schaftes 3 ist. Sobald der Ventilteller 1 an dem Anschlag 4 des Fangmagneten 10 anliegt werden Ventilteller 1 und Schaft 3 dann miteinander verbunden. Besonders bevorzugt ist dabei das Schweißen als Verbindungsverfahren. Auf diese Weise wird sichergestellt, dass bei der Einstellung der ersten Position des Gegenlagers 7 auch gleichzeitig ein Anliegen des Ventiltellers 1 am Anschlag 4 des Fangmagneten realisiert wird. Fertigungstoleranzen der bis dahin eingebauten Teile der Zusatzsteuerventileinrichtung werden somit bis zum Abschluss des vierten Schrittes des Verfahrens vollständig kompensiert, was letztlich die Einstellung einer nahezu optimierten Mittellage des Ventiltellers 1 im stromlosen Zustand der Zusatzsteuerventileinrichtung in besonders einfacher und vorteilhafter Weise ermöglicht.

In Fig. 5 sind Teile der Zusatzsteuerventileinrichtung dreidimensional nach Abschluss des fünften Schrittes des Verfahrens dargestellt. Ausgehend von der in Fig. 4 dargestellten Position wird in einem fünften Schritt eine zweite Ventilfeder 8, bei der es sich ebenfalls um eine Druckfeder handelt, in die Führung 2 an ihrem, dem Fangmagneten 10 abgewandten Ende bis zum Anliegen an das erste Gegenlager 7 eingebracht.

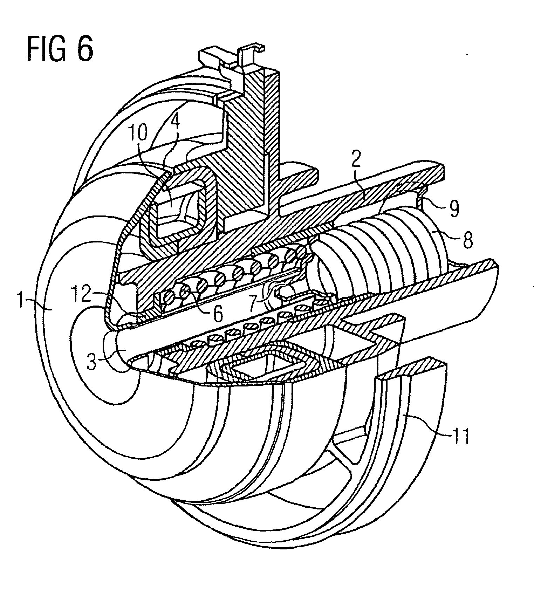

In Fig. 6 sind Teile der Zusatzsteuerventileinrichtung dreidimensional nach Abschluss des sechsten Schrittes des Verfahrens dargestellt. Ausgehend von der in Fig. 5 dargestellten Position wird in einem sechsten Schritt ein zweites Gegenlager 9 für die zweite Ventilfeder 8 in die Führung 2, an ihrem, dem Fangmagneten 10 abgewandten Ende eingebracht und in die Führung 2 an einer vorab bestimmten zweiten Position, die theoretisch eine genaue Einstellung der Mittelage des Ventilgliedes im stromlosen Zustand der Zusatzsteuerventileinrichtung ermöglicht, fixiert. Das eigentliche Fixieren kann dabei beispielsweise über ein Außengewinde (nicht dargestellt) des zweiten Gegenlagers 9 und ein komplementär zu diesem ausgebildeten Innengewinde (nicht dargestellt) der Führung 2 erfolgen. Nach der Fixierung ist das zweite Gegenlager 9 somit nicht mehr in Richtung der Längsachse in der Führung 2 reversibel verschiebbar. Der in der Fig. 6 dargestellten Position schließt sich abschließend ein siebter Schritt an (nicht dargestellt), bei dem das Halten des ersten Gegenlagers 7 in der vorab bestimmten ersten Position aufgehoben wird. Dies geschieht dann beispielsweise durch ein Herausführen des Stößels. Aufgrund der dann wirkenden Kräfte der ersten Ventilfeder 6 und der zweiten Ventilfeder 8 gelangt das aus dem Ventilteller 1 und dem Ventilschaft 3 bestehende Ventilglied automatisch in eine nahezu optimale Mittellage zwischen dem Portalmagneten (nicht dargestellt) und dem Fangmagneten 10. Die dabei noch einwirkenden Fertigungstoleranzen von der zweiten Ventilfeder 8 und dem zweiten Gegenlager 9 sind dabei vernachlässigbar, so dass man in der Praxis von der Einstellung einer nahezu optimalen Mittellage sprechen kann.

In Fig. 7 ist der Längsschnitt durch Teile einer Zusatzsteuerventileinrichtung nach dem Stand der Technik vereinfacht und schematisch dargestellt. Das Ventilglied 1' besteht dabei aus einem Einzelteil, gebildet aus Ventilteller und Ventilschaft. Um die gewünschte Mittellage M einzustellen, wird nach dem Stand der Technik in folgenden Schritten vorgegangen. Zuerst wird das Federlager 12 in die Führung 2 eingeführt. Anschließend erfolgt das Einführen der ersten Ventilfeder 6. Nachdem dies geschehen ist, wird das Ventilglied 1' in die Führung 2 von seiner dem Fangmagneten 10 zugewandten Seite eingeführt, bis der Anschlag 4 des Fangmagneten 10 kontaktiert ist. Von dem dem Fangmagneten 10 abgewandten Ende der Führung 2 wird dann das erste Gegenlager 7 in die Führung 2 eingeführt und mit dem Ventilglied 1' verbunden. Danach wird die zweite Ventilfeder 8 und das zweite Gegenlager 9 in die Führung 2 eingeführt und abschließend das zweite Gegenlager 9 an einer vorab bestimmten zweiten Position, die theoretisch eine genaue Einstellung der Mittellage des Ventilgliedes im stromlosen Zustand der Zusatzsteuerventileinrichtung ermöglicht, fixiert. Wären keine Fertigungstoleranzen zu verzeichnen, würde dann das Ventilglied 1' genau in die Mittellage M überführt werden. Aufgrund von Fertigungstoleranzen ist dies jedoch nicht möglich, was dazu führt, dass man in der Regel manuell versuchen muss, die gewünschte optimale Mittellage M durch ein Nachjustieren des zweiten Gegenlagers 9 einzustellen. Sofern das zweite Gegenlager 9 ein Außengewinde und die Führung 2 ein komplementäres Innengewinde aufweisen, muss dabei das Gegenlager 9 weiter in die Führung 2 hinein oder heraus geschraubt werden. Dies ist relativ zeitaufwendig und somit für eine Großfertigung nicht geeignet. Nach dem erfindungsgemäßen Verfahren kann vorteilhaft auf eine manuelle Einjustierung verzichtet werden, was eine besonders vorteilhafte Großfertigung ermöglicht.

## Patentansprüche

1. Verfahren zur Anordnung eines Ventilgliedes in einer Zusatzsteuerventileinrichtung, die eine Führung (2) für das Ventilglied aufweist, das mittels eines Portalmagneten und eines Fangmagneten (10) beweglich ist und einen Ventilteller (1) und einen Schaft (3) mit einem ersten Gegenlager (7) aufweist, wobei zwischen dem Gegenlager (7) und einem ersten Ende der Führung (2) eine erste Ventilfeder (6) und zwischen dem Gegenlager (7) und einem zweiten Ende der Führung (2) eine zweite Ventilfeder (8) angeordnet sind, **gekennzeichnet durch** einen Verfahrensablauf, bei dem in einem ersten Schritt die Innenseite der Führung (2) für das Ventilglied an ihrem, dem Fangmagneten (10) zugewandten Ende mit einem Federlager (12) versehen wird; in einem zweiten Schritt die erste Ventilfeder (6) in die Führung (2) an ihrem dem Fangmagneten (10) abgewandten Ende bis zum Anliegen an das Federlager (12) eingebracht wird; der Schaft (3) des Ventilgliedes und das mit diesem an seinem dem Fangmagneten (10) abgewandten Ende verbundene erste Gegenlager (7) für die erste Ventilfeder (6) in einem dritten Schritt in die Führung (2) an ihrem dem Fangmagneten (10) abgewandten Ende eingebracht werden, wobei der Schaft (3) innerhalb der ersten Ventilfeder (6) geführt wird und das erste Gegenlager (7) abschließend in der Führung (2) an einer vorab bestimmten ersten Position, die theoretisch eine genaue Einstellung der Mittellage des Ventilgliedes im stromlosen Zustand der Zusatzsteuerventileinrichtung ermöglicht, lösbar gehalten wird; bei dem in einem vierten Schritt der Ventilteller (1) des Ventilgliedes mit seinem mittig angeordneten umlaufenden Bund (1') mit seiner konkaven Seite auf den Schaft (3) an seinem dem Fangmagneten (10) zugewandten Ende aufgeschoben und mit dem Fangmagneten (10) zur Anlage gebracht wird und Ventilteller (1) und Schaft (3) dann miteinander verbunden werden; bei dem in einem fünften Schritt die zweite Ventilfeder (8) in die Führung (2) an ihrem dem Fangmagneten (10) abgewandten Ende bis zum Anliegen an das erste Gegenlager (7) eingebracht wird; und bei dem in einem sechsten Schritt ein zweites Gegenlager (9) für die zweite Ventilfeder (8) in die Führung (2) an ihrem, dem Fangmagneten (10) abgewandten Ende eingebracht und in der Führung (2) an einer vorab bestimmten zweiten Position, die theoretisch eine genaue Einstellung der Mittellage des Ventilgliedes im stromlosen Zustand der Zusatzsteuerventileinrichtung ermöglicht, fixiert wird; und das Halten des ersten Gegenlagers (7) in der vorab bestimmten ersten Position abschließend in einem siebten Schritt aufgehoben wird.

2. Verfahren nach Anspruch 1, bei dem im dritten Schritt der Schaft (3) und das erste Gegenlager (3') als Einzelteil in die Führung (2) eingebracht werden.

3. Verfahren nach Anspruch 1 oder Anspruch 2, bei dem das Verbinden von Ventilteller (1) und Schaft (3) durch Schweißen erfolgt.

## Claims

1. Method for arranging a valve element in an additional control valve device which has a guide (2) for the valve element which can be moved by means of a gantry magnet and a trapping magnet (10), and has a valve disc (1) and a stem (3) with a first counter bearing (7), wherein a first valve spring (6) is arranged between the counter bearing (7) and a first end of the guide (2), and a second valve spring (8) is arranged between the counter bearing (7) and a second end of the guide (2), **characterized by** a method sequence in which, in a first step, the inside of the guide (2) for the valve element is provided, at its end facing the trapping magnet (10), with a spring bearing (12); in a second step, the first valve spring (6) is introduced into the guide (2) at its end facing away from the trapping magnet (10) until it comes to bear against the spring bearing (12); in a third step, the stem (3) of the valve element and the first counter bearing (7), connected to this stem at its end facing away from the trapping magnet (10), for the first valve spring (6) is introduced into the guide (2) at its end facing away from the trapping magnet (10), wherein the stem (3) is guided within the first valve spring (6), and the first counter bearing (7) is finally releasably held in the guide (2) at a previously determined first position which theoretically permits precise setting of the centre position of the valve element in the currentless state of the additional control valve device; in which, in a fourth step, the valve disc (1) of the valve element is fitted with its centrally arranged circumferential collar (1') with its concave side onto the stem (3) at its end facing the trapping magnet (10), and is brought to bear against the trapping magnet (10), and the valve disc (1) and the stem (3) are then connected to one another; in which, in a fifth step, the second valve spring (8) is introduced into the guide (2) at its end facing away from the trapping magnet (10) until it comes to bear against the first counter bearing (7); and in which, in a sixth step, a second counter bearing (9) for the second valve spring (8) is introduced into the guide (2) at its end facing away from the trapping magnet (10), and is secured in the guide (2) at a previously determined second position which theoretically permits the central position of the valve element to be set precisely in the currentless state of the additional control valve device; and the holding of the first counter bearing (7) in the previously determined first position is finally cancelled in a seventh step.

2. Method according to Claim 1, in which, in the third step, the stem (3) and the first counter bearing (3') are introduced as a single part into the guide (2).

3. Method according to Claim 1 or Claim 2, in which the connection of the valve disc (1) and stem (3) takes place by means of welding.

## Revendications

1. Procédé d'installation d'un obturateur de soupape dans un ensemble soupape de commande supplémentaire, où ledit ensemble comporte un système de guidage (2) pour l'obturateur de soupape, lequel est commandé au moyen d'un aimant à portique et d'un aimant de retenue (10) et comporte une tête de soupape (1) et une queue de soupape (3) avec un premier palier-support (7), un premier ressort de soupape (6) étant disposé entre le palier-support (7) et une première extrémité du système de guidage (2) et un deuxième ressort de soupape (8) étant disposé entre le palier-support (7) et une deuxième extrémité du système de guidage (2), ledit procédé étant **caractérisé par** un processus au cours duquel, en un premier temps, la face intérieure du système de guidage (2) pour l'obturateur de soupape est dotée d'un palier de ressort (12) à son extrémité tournée vers l'aimant de retenue (10); en un deuxième temps, le premier ressort de soupape (6) est engagé dans le système de guidage (2), à son extrémité opposée à l'aimant de retenue (10), jusqu'à ce qu'il s'applique sur le palier de ressort (12); en un troisième temps, la queue (3) de l'obturateur de soupape et le premier palier-support (7) pour le premier ressort de soupape (6), qui est lié à cette queue à son extrémité opposée à l'aimant de retenue (10) sont engagés dans le système de guidage (2) à son extrémité opposée à l'aimant de retenue (10), la queue (3) étant guidée à l'intérieur du premier ressort de soupape (6) et, pour terminer, le premier palier-support (7) étant maintenu d'une façon amovible dans une première position définie au préalable, qui permet théoriquement un réglage précis de la position moyenne de l'obturateur de soupape dans un état hors tension de l'ensemble soupape de commande supplémentaire; en un quatrième temps, avec son embase périphérique (1') disposée au centre, la tête de soupape (1) de l'obturateur de soupape est enfichée par sa face concave sur la queue (3) à son extrémité tournée vers l'aimant de retenue (10) et amenée en application sur l'aimant de retenue (10) et la tête de soupape (1) et la queue (3) sont alors liées l'une à l'autre; en un cinquième temps, le deuxième ressort de soupape (8) est amené dans le système de guidage (2) à son extrémité opposée à l'aimant de retenue (10) jusqu'à ce qu'il s'applique sur le premier palier-support (7); et, en un sixième temps, un deuxième palier-support (9) pour le deuxième ressort de soupape (8) est engagé dans le système de guidage (2) à son extrémité opposée à l'aimant de retenue (10) et fixé dans le système de guidage (2) à une deuxième position définie au préalable, qui permet théoriquement un réglage précis de la position centrale de l'obturateur de soupape dans l'état hors tension de l'ensemble soupape de commande supplémentaire; et, finalement, en un septième temps, le maintien du premier palier-support (7) dans la première position définie au préalable est supprimé.

2. Procédé selon la revendication 1, au cours duquel, au troisième temps, la queue (3) et le premier palier-support (3') sont engagés dans le système de guidage (2) en temps que pièce constitutive unique.

3. Procédé selon la revendication 1 ou la revendication 2, au cours duquel le lien entre la tête de soupape (1) et la queue (3) est réalisé par soudage.
